# EUROPEAN PATENT APPLICATION

(11) **EP 2 811 436 A1**
(43) Date of publication of application: **10.12.2014**
(21) Application number: 12867583.2
(22) Date of filing: 31.01.2012
(51) Int. Cl.: G06Q 10/06

(54) **MOBILE TERMINAL MANAGEMENT SERVER, AND MOBILE TERMINAL MANAGEMENT PROGRAM**

(71) Applicant: IPS Co., Ltd., Osaka 530-0011 (JP)
(72) Inventor: AKITA, Toshifumi, Kita-ku, Osaka-shi, Osaka 5300011 (JP)
(74) Representative: Grünecker, Kinkeldey, Stockmair & Schwanhäusser
(86) International application number: PCT/JP2012/000630
(87) International publication number: WO 2013/114438

(57) **Abstract**

An object of the present invention is to reduce a load required for ERP system maintenance and for data update, in a business system that provides a user with information relating to a report. A mobile terminal management server (10), on which ERP software runs, includes a process flow DB (18), and a process flow control definition matrix DB (19) that stores matrix data, which are information relating to the business processes, and which represent the process flow including the business processes, and a processing type (e.g., "registration" or "change") allowed for process data generated in each of the business processes. The mobile terminal management server (10) receives, from the mobile terminal (31), processing target identification information by which the process flow and the business processes can be identified, identifies a processing type corresponding to the processing target identification information by referring to the PFCM DB (19), receives, from the mobile terminal (31), input data entered by the user (X), and updates the process flow data stored in the process flow DB (18) based on the processing type and the input data.

## Description

### Technical Field

The present invention relates to a mobile terminal management server, which is a server on which ERP software runs, which server provides various types of data depending on a request from a mobile terminal used by a user via a communication network, and to a mobile terminal management program provided in the mobile terminal management server.

### Background Art

Conventionally, software called enterprise resource planning (ERP) has been mainstream as packaged software for building a core business system in a business enterprise. It is becoming increasingly common that a core business system containing such ERP software (an enterprise resource planning system, or an ERP system) is built on a relational database, and an application program is often designed mainly for business processes. Such an application program is often operated not mainly for outputting a report.

In such a situation, various data warehouse systems that complement core business systems have been provided for the purpose of processing a large volume of business data at a high speed, analyzing the business data from various standpoints, and then outputting reports (see Patent Literature 1).

### Citation List

### Patent Literature

Patent Literature 1: JP 2002-312208 A

### Summary of Invention

### Technical Problem

When various types of data relating to a report (hereinafter referred to as "report data") are updated, a data warehouse system such as one described above may use a plurality of programs developed depending on the plurality of types of data, in order to determine, for example, whether or not data entered by a user include an error.

However, a method that uses a plurality of programs to determine correctness of data presents a problem in that the more types of data an ERP system handles, the more time will be required until a determination result is output. Such a method also requires work to develop a correctness determination program dependent on an added data type each time a data type is added, and thus presents a problem in that cost for maintaining a system increases.

Meanwhile, a conventional ERP system registers data (including data entered by a user, and data calculated from various types of data) obtained in each business process to a dedicated data table (table) to manage the data. That is, a conventional ERP system updates different tables for respective input process types, such as received order and shipping instruction. Here, an "input process" means a process of entering, into a table, various types of data obtained (or determined) by an administrator of the ERP system etc. during a business process.

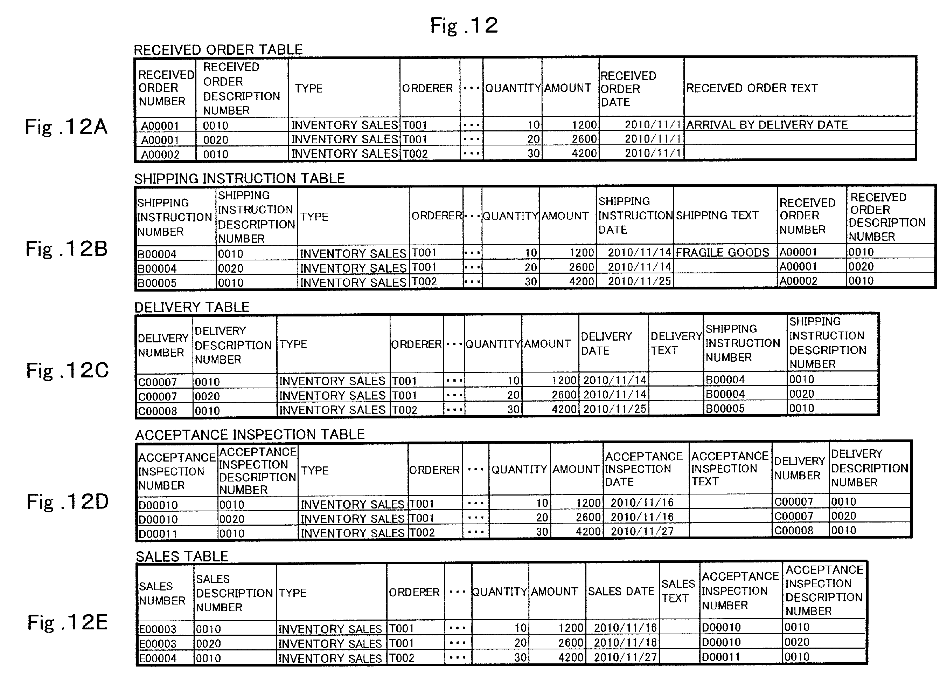

Figs. 12(A) to 12(E) are illustrative diagrams for each explaining an example of a table configuration in a conventional ERP system. For example, when a business flow (process flow) including a plurality of business processes is an "inventory sales" business flow, the process flow includes five input processes: received order, shipping instruction, delivery, acceptance inspection, and sales. In this case, the tables for storing data associated with an "inventory sales" process flow are, as shown in Figs. 12(A) to 12(E) for example, five tables: a received order table, a shipping instruction table, a delivery table, an acceptance inspection table, and a sales table. Each table corresponds to each input process.

That is, the conventional ERP system updates different tables for respective input process types. Thus, the plurality of business processes included in a single process flow are associated with one another by assigning an identifier (in Figs. 12(A) to 12(E), a received order number and a received order description number in the shipping instruction table, and a shipping instruction number and a shipping instruction description number in the delivery table, etc.) to data relating to each business process (process data).

Thus, the conventional ERP system is required, for each input process, to determine a table associated with the type of that input process, and to input an identifier of other corresponding process data. That is, in the case shown in Figs. 12(A) to 12(E) for example, when process data relating to a "shipping instruction" business process that is associated with the process data identified by both a received order number "A00001" and a received order description number "0010" (i.e., various types of data stored in a same row as the received order number "A00001" and the received order description number "0010" in the received order table) are registered in a database provided in the ERP system, the received order number "A00001" and the received order description number "0010" need to be registered in the shipping instruction table as the process data relating to the "shipping instruction" business process, in addition to a shipping instruction number and a shipping instruction description number for identifying the process data, a type showing the type of the business process, and data representing details of the business process (e.g., orderer, quantity, amount, shipping instruction date, shipment text, etc.). This may cause certain same data (e.g., orderer, quantity, amount, etc.) to be registered in a plurality of tables, thereby presenting a problem from a viewpoint of efficient data processing.

Moreover, when a report is to be generated depending on a request from a user using various types of data stored in various tables, the conventional ERP system needs to retrieve necessary process data by tracing an identifier of the process data to obtain necessary process data individually. Accordingly, a problem exists in that a process flow including a large number of business processes causes an excessive processing load for outputting a report relating to that process flow.

An object of the present invention is to solve the problems described above, and thereby to reduce a processing load required for business system maintenance and for data update, in a business system (ERP system) that provides a user with information relating to a report.

### Solution to Problem

A mobile terminal management server according to the present invention is a mobile terminal management server, which is a server on which ERP software runs, which server provides various types of data depending on a request from a mobile terminal used by a user via a communication network. The mobile terminal management server includes a process flow data storage means configured to store process flow data containing various types of data relating to a process flow that includes a plurality of business processes, a matrix data storage means configured to store matrix data, which are information relating to the business processes, and which represent the process flow including the business processes, and a processing type allowed for process data generated in each of the business processes, a processing target identification information receiving means configured to receive, from the mobile terminal, processing target identification information by which the process flow and the business processes can be identified, a processing type identification means configured to identify a processing type corresponding to the processing target identification information received by the processing target identification information receiving means, by referring to the matrix data storage means, an input data receiving means configured to receive, from the mobile terminal, input data entered by the user, and a process flow data update means configured to update the process flow data stored in the process flow data storage means based on the processing type identified by the processing type identification means and on the input data received by the input data receiving means.

The configuration described above can reduce a load required for business system maintenance and for data update, in a business system (ERP system) that provides a user with information relating to a report.

The configuration may be as follows: the matrix data includes row items to which a plurality of types of process flows are assigned, and column items to which a plurality of types of business processes are assigned; in each cell, a flag is set, indicating whether or not a process flow assigned to a corresponding one of the row items includes a business process assigned to a corresponding one of the column items; the processing type identification means refers to the flag set in a cell corresponding to a combination of a process flow and a business process indicated by the processing target identification information; when the flag indicates that the process flow includes the business process, the processing type identification means identifies the processing type corresponding to the processing target identification information as a processing type allowed for process data of the business process; and the input data receiving means receives input data dependent on the processing type that is identified by the processing type identification means.

The configuration may be as follows: the mobile terminal management server includes an input data determination means configured to determine whether or not the input data received by the input data receiving means satisfies an update condition preset as a condition required for updating data relating to a business process in the process flow indicated by the processing target identification information; and when the input data determination means determines that the input data satisfies the update condition, the process flow data update means updates the process flow data using the input data.

The configuration may be as follows: the update condition is that the input data contains data corresponding to an essential item preset in relation to a business process indicated by the processing target identification information.

Moreover, a mobile terminal management program according to the present invention is a mobile terminal management program that executes ERP software, and which instructs a mobile terminal management server to execute a process to provide various types of data depending on a request from a mobile terminal used by a user via a communication network. The mobile terminal management program instructs the mobile terminal management server including a process flow data storage means configured to store process flow data containing various types of data relating to a process flow that includes a plurality of business processes, and a matrix data storage means configured to store matrix data, which are information relating to the business processes, and which represent the process flow including the business processes, and a processing type allowed for process data generated in each of the business processes, to execute a processing target identification information receiving process of receiving, from the mobile terminal, processing target identification information by which the process flow and the business processes can be identified, a processing type identification process of identifying a processing type corresponding to the processing target identification information received in the processing target identification information receiving process, by referring to the matrix data storage means, an input data receiving process of receiving, from the mobile terminal, input data entered by the user, and a process flow data update process of updating the process flow data stored in the process flow data storage means based on the processing type identified in the processing type identification process and on the input data received in the input data receiving process.

### Advantageous Effects of Invention

The present invention achieves a reduction in a load required for business system maintenance and for data update, in a business system (ERP system) that provides a user with information relating to a report.

### Brief Description of Drawings

Fig. 1 is a block diagram illustrating an example configuration of a report inquiry system.
Fig. 2 is a block diagram illustrating an example configuration of a mobile terminal management server.
Fig. 3 is an illustrative diagram illustrating an example of process flow data that have been stored.
Fig. 4 is an illustrative diagram illustrating an example of PFCM that has been stored.
Fig. 5 is a flowchart illustrating an example of a process flow data entry process.
Fig. 6 is an illustrative diagram illustrating an example of a data processing target entry screen.
Fig. 7 is a flowchart illustrating an example of a data entry screen information generation process.
Fig. 8 is an illustrative diagram illustrating an example of a data entry screen.
Fig. 9 is an illustrative diagram illustrating an example of a data entry screen.
Fig. 10 is an illustrative diagram illustrating an example of a data entry screen.
Fig. 11 is an illustrative diagram illustrating an example of a data entry screen.
Figs. 12(A) to 12(E) are illustrative diagrams for each explaining an example of a table configuration in a conventional ERP system.

### Description of Embodiments

An example of one embodiment of the present invention will be described below with reference to the drawings.

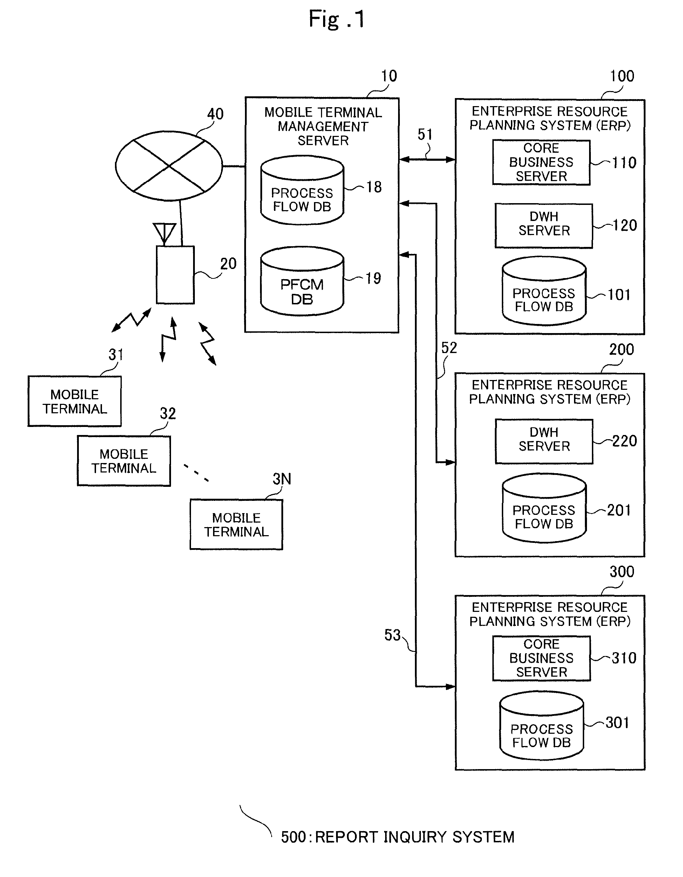

Fig. 1 is a block diagram illustrating an example configuration of a report inquiry system 500 according to one embodiment of the present invention. As shown in Fig. 1, the report inquiry system 500 includes a mobile terminal management server 10, a repeater 20, a plurality of mobile terminals 31 to 3N (where N is any positive integer), an enterprise resource planning system 100, an enterprise resource planning system 200, and an enterprise resource planning system 300. The mobile terminal management server 10 and each of the mobile terminals 31 to 3N are connected to each other via a communication network 40, such as the Internet, and the repeater 20. The mobile terminal management server 10 is connected to the enterprise resource planning system 100, to the enterprise resource planning system 200, and to the enterprise resource planning system 300 respectively by communication networks 51, 52, and 53 such as a local area network (LAN), a dedicated communication line, or the like. Note that the mobile terminals and the enterprise resource planning systems may be configured so as to be capable of communicating with one another via the mobile terminal management server, or may be configured so as not to be capable of communicating with one another.

The enterprise resource planning system 100 includes a core business server 110, a data warehouse server (DWH server) 120, and a process flow DB 101. The enterprise resource planning system 200 includes a DWH server 220 and a process flow DB 201. The enterprise resource planning system 300 includes a core business server 310 and a process flow DB 301.

The plurality of enterprise resource planning systems 100, 200, and 300 having configurations different from one another each provide a function as an enterprise resource planning system by communicating with (sending and receiving various information to and from) the mobile terminal management server 10 as necessary (i.e., depending on the functions that each of the enterprise resource planning systems 100, 200, and 300 has). That is, in the report inquiry system, even the system 200 not having a core business server and the system 300 not having a DWH server can still provide a function as an enterprise resource planning system by communicating with the mobile terminal management server 10. Note that even a system (not shown) not having a process flow DB can provide a function as an enterprise resource planning system by storing process flow data in the mobile terminal management server 10. Since the core business server or the like included in each of the enterprise resource planning systems uses a known technique, the following description is presented in terms of the enterprise resource planning system 100 as an example.

It is assumed that the core business server 110 and the DWH server 120 are connected to each other by a dedicated communication line.

The core business server 110 is administered by, for example, an administrator of the report inquiry system 500, and has various functions to manage report information (e.g., generate, update, and save information) relating to various business tasks. The core business server 110 includes a commonly-used information processing device having an operating system (OS) and a relational DB.

Here, the term "report" generally refers to an account book or a slip of any kind. In addition, an account book means a book in which details on delivery and receipt of money and of articles are recorded. A slip provides data that serve as a basis for bookkeeping, and provides evidence of transactions on business. In this example, a description will be given, as an example, for a case in which process data managed by the core business server 110 include only slip data as the report data.

The core business server 110 executes various processes according to a business application program. Examples of a business application program include, for example, a sales task management program, a purchase task management program, a production management program, a financial accounting management program, and a managerial accounting management program.

The DWH server 120 is administered by, for example, an administrator of this system, and has various functions to implement a data warehouse. Here, the term "data warehouse" means a system that analyzes a relationship between items in business data, such as report data stored in temporal order. Moreover, the DWH server 120 has a function to register various types of data in a predetermined storage area (business-related data DB described later) by, for example, converting a file in a CSV format transferred from the core business server 110 into one in a predetermined data format. Note that the DWH server 120 may be configured so as to extract data dependent on each storage area, in a CSV format, without converting the data format.

The process flow DB 101 is a storage medium that stores process flow data including various types of process data (or report data) collected and marshaled during various information processing using various programs stored in a business application program DB (not shown) of the core business server 110. Process flow data will be described later in detail. In addition, in this example, the enterprise resource planning system 100 includes a business-related data DB (not shown) managed by the DWH server 120. The core business server 110 has a function to convert the process data stored in the process flow DB 101 into one in a comma separated values (CSV) format depending on a predetermined extraction condition, and to send the converted data to the mobile terminal management server 10. In this example, the core business server 110 transfers the data file in a CSV format to the mobile terminal management server 10 using File Transfer Protocol (FTP).

The mobile terminal management server 10 is a server on which ERP software runs, and is a server that provides various types of data depending on a request from a mobile terminal used by a user via a communication network. For example, the mobile terminal management server 10 includes an information processing device such as a WWW server, and is administered by a system administrator of the report inquiry system 500.

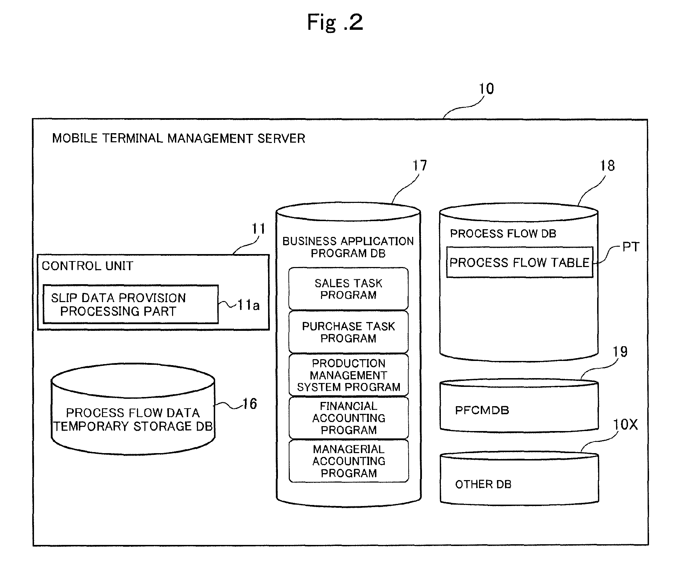

Fig. 2 is a block diagram illustrating an example configuration of the mobile terminal management server 10. As shown in Fig. 2, the mobile terminal management server 10 includes a control unit 11 that provides various control functions, a process flow data temporary storage DB 16, a business application program DB 17, a process flow DB 18, a PFCM DB 19, and a miscellaneous DB 10X that stores various types of data (e.g., data utilized by various programs stored in the business application program DB 17) required to provide a function as a typical core business server. Note that the miscellaneous DB 10X is not necessarily relevant to the present invention, and thus a detailed description thereof is omitted. The control unit 11 includes a slip data provision processing part 11a that performs, for example, a process to provide process flow data to the mobile terminals 31 to 3N.

The process flow data temporary storage DB 16 is a storage medium that temporarily stores the process flow data obtained from the enterprise resource planning system 100 side, as well as the process flow data stored in the process flow DB 18. The process flow data stored in the process flow data temporary storage DB 16 are updated, for example, regularly (every day, every three days, every twelve hours, etc.).

The business application program DB 17 is a storage medium that stores programs used in various business tasks. Examples of the programs stored in the business application program DB 17 include a sales task management program, a purchase task management program, a production management program, a financial accounting management program, and a managerial accounting management program.

The process flow DB 18 is a storage medium that stores process flow data including various types of process data (or report data) collected and marshaled during various information processing using various programs stored in the business application program DB 17. In this example, a case will be described in which, in the process flow DB 18, process flow data including various types of data relating to a process flow including a plurality of business processes are stored in a process flow table PT. Moreover, in this example, a case will be described in which the mobile terminal management server 10 manages process flow data generated in each process flow centrally in a single process flow table PT. Note that, in this example, it is assumed that the process flow data include commonly-used slip data (e.g., for slip data corresponding to a received order slip, data that are associated with received order slip header information, received order slip description information, scheduled delivery date, etc., and are stored in a structure that allows retrieval using a key such as a slip number. A slip number includes a received order number, an order number, a shipment number, a receipt/delivery number, a bill reference, a billing number, an accounting number, etc.).

The mobile terminal management server 10 may be configured so as to manage the process flow data using a plurality of tables, each of which corresponds, for example, to each of the types described later, or to each same value in a part of the content (e.g., orderer, etc.) of common data described later.

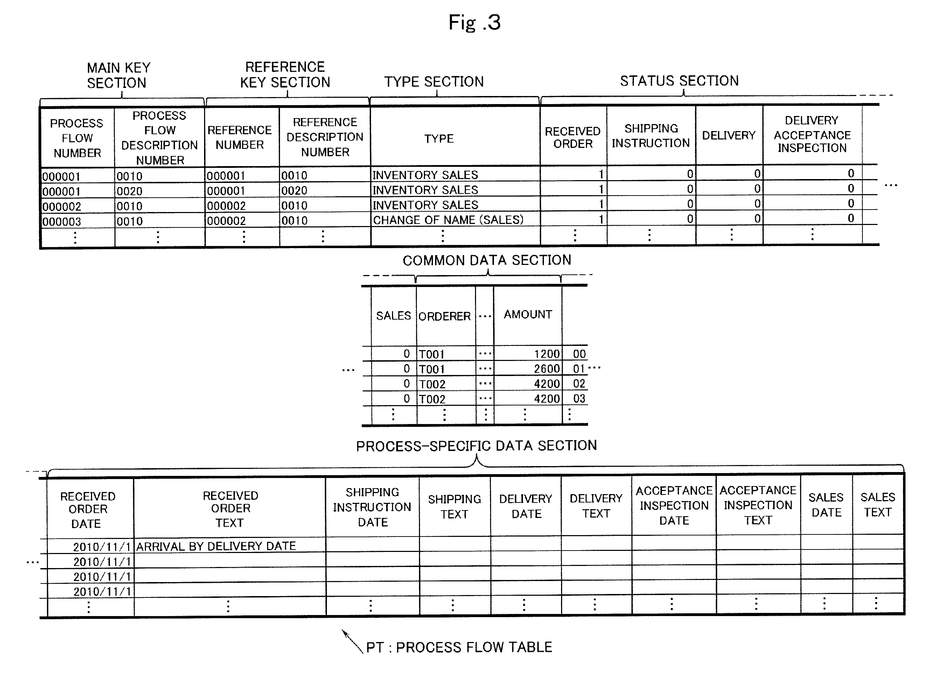

Fig. 3 is an illustrative diagram illustrating an example of process flow data that have been stored in the process flow DB 18. As shown in Fig. 3, the process flow data in this example include a main key section, a reference key section, a type section, a status section, a common data section, and a process-specific data section. An item corresponding to each section of the process flow data (i.e., each column item in the process flow table PT) represents a type of process data included in the process flow data. That is, data relating to each business process included in a process flow are assigned to corresponding sections forming the process flow data, and are thus stored. Note that process data relating to a single process flow (e.g., a sequence of process flow from received order to delivery with respect to a certain company) are stored as a single entry in the process flow table PT (i.e., a single row in the process flow table PT). Such a configuration allows a relationship between process data to be defined.

Here, the "main key section" is a section for storing main key data of process flow data. The main key data are data for uniquely identifying the process flow data. In this example, the main key section includes a process flow number and a process flow description number. That is, in this example, a combination of a process flow number and a process flow description number forms an identifier (ID) of a set of process flow data. The main key section is updated upon initial registration of the process flow data. The phrase "upon initial registration of the process flow data" as used herein is intended to mean a time when an entry (data row) is added to the process flow data: for example, a time when process data are registered, wherein the process data belong to a certain process flow, and the other process data corresponding to those process data are not yet registered. Moreover, the term "update" as used herein is intended to include addition of data.

Note that a "process flow number" is an identifier for identifying a set of process flow data (i.e., a single row of the process flow table PT shown in Fig. 3). A process flow number is assigned to process data having a same value for at least one predetermined item. In this example, a same process flow number is assigned to process flow data having a same type and a same orderer in the process flow data.

Further, a "process flow description number" is an identifier for identifying a specific set of process flow data among the sets of process flow data to which a same process flow number is assigned. That is, in the process flow table PT shown in Fig. 3, the process flow data including the process data showing that business orders of prices "1200" and "2600" have been received from the orderer "T001" with respect to both the process flow type "inventory sales" and the business process "received order" can be uniquely identified by the combinations of the process flow number "000001" and the process flow description numbers "0010" and "0020," respectively.

Next, the "reference key section" is a section for storing reference key data of process flow data. The reference key data are data for identifying other process flow data (or other process data) relating to that process flow, such as an original transaction associated with return after sales. In this example, the reference key section includes a reference number and a reference description number. The reference key section is updated upon initial registration of the process flow data.

The reference number subsection and the reference description number subsection respectively store the process flow number and the process flow description number of another process flow associated with that process flow. If, however, there are no other process flows associated with that process flow such as a case of a new transaction, the reference key section stores data representing the same values as those of the main key section of that entry (that is, the reference number subsection stores the process flow number, and the reference description number subsection stores the process flow description number). Moreover, when the reference key section represents other process data associated with that process flow, data for identifying the type of the process data is further provided in the reference key section.

Further, the "type section" is a section for storing type data of process flow data. The type data are data for indicating the type of a process flow, such as inventory sales, sample shipment, etc. The type section is updated upon initial registration of the process flow data. Note that the type of a process flow is not limited to inventory sales and sample shipment. In addition, required processes are predetermined for each process flow type (in other words, the types and the number of included business processes differ for each process flow type).

Further, the "status section" is a section for storing status data of process flow data. The status data are data for indicating progress of a process flow (that is, data for representing progress of each of the plurality of business processes included in a process flow). In this example, the status data are each set to "0" for an incomplete process, and to "1" for a complete process for a business process required by that process flow, thereby indicating progress of each business process. That is, as shown in Fig. 3 for example, assuming that a piece of process-specific data relating to an "received order" business process (e.g., received order date) is registered when the business processes included in a process flow whose type is "inventory sales" are "received order," "shipment," "delivery," "delivery acceptance inspection," and "sales," the status data will be "1" in the subsection corresponding to "sales," and remain in an initial state (i.e., a state in which "0" is set) in the other subsections.

That is, the status section in this example is updated upon each business process. In other words, the status section is updated upon entry of process-specific data, more specifically, each time it is determined that a business process has been completed because a predetermined status change condition is satisfied. Although the status change condition is not necessarily limited, it is assumed in this example that a condition that "process-specific data corresponding to one business process have all been entered" is stored as the status change condition in a predetermined storage area in the mobile terminal management server 10.

Since data of different types of process flows are stored in a same table in this example, unnecessary process data may be required to be stored among items (column items) that form the table for a specific process flow. In such a case, it is assumed that the process flow table will have empty data in a section for storing unnecessary process data, and that the part of status data corresponding to the empty data stores "0."

Further, the "common data section" is a section for storing common data of process flow data. The common data are data that are independent of business processes (i.e., data common to business processes contained in a same process flow) such as orderer, ship-to address, etc. The common data section is updated upon initial registration of the process flow data.

Further, the "process-specific data section" is a section for storing process-specific data of process flow data. The process-specific data are data that are specific to each particular business process included in a same process flow, such as received order date as well as data registered for each business process (e.g., text data describing a caution such as "arrival by delivery date" or "fragile goods (fragile, handle with care)"). The process-specific data section is updated for each business process. Thus, it can be said that, in this example, process flow data that depend on business processes are "process-specific data," and process flow data that do not depend on business processes are "common data."

The process flow data of this example have been described. Definitions of various terms shown in Fig. 3 are now briefly described.

First, the term "received order" means a state in which an order has been received from a customer, and a contract has been concluded with the customer. The term "shipping instruction" means a state in which an instruction is given to a warehouse company or to logistic personnel to ship an article. The term "delivery" means a state in which an article has been shipped from a warehouse, and transportation has been started. The term "acceptance inspection" means a state in which acceptance inspection has been performed by the customer, and the ownership of the article has been transferred to the customer. The term "sales" means a state in which acceptance inspection by the customer has been confirmed, and the credit amount toward the customer has been finalized (i.e., the credit amount has been recorded).

The term "acceptance inspection" is also used to mean "a task to examine whether a delivered article or service meets the specification as ordered (has quantity, color, shape, and quality as ordered)" and "that the ownership of an asset is transferred upon completion of acceptance inspection." Note that in financial accounting (or in institutional accounting) or on an ERP system, an "acceptance inspection" event is defined separately from a delivery event in order to clarify the time of ownership transfer of an asset.

The PFCM DB 19 is a storage medium for storing PFCM data that represents a PFCM. Here, a PFCM (i.e., process flow control definition matrix) is a matrix used to determine whether or not to allow entering of data (that is, updating of process flow data) relating to a plurality of process flows. A PFCM is generated by, for example, the administrator of the report inquiry system 500.

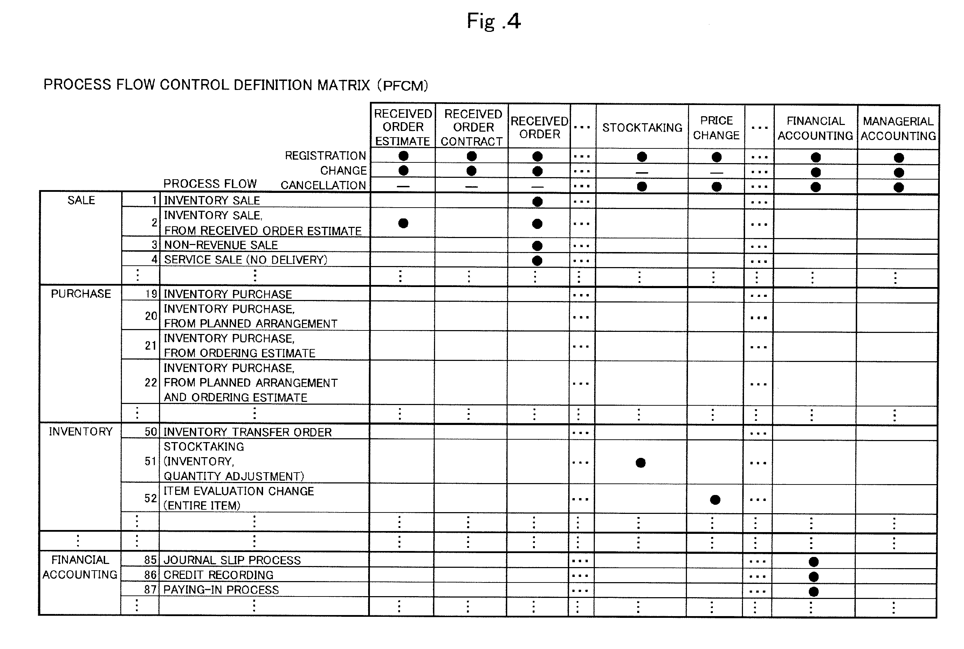

Fig. 4 is an illustrative diagram illustrating an example of a process flow control definition matrix (PFCM) that has been stored in the PFCM DB 19. As shown in Fig. 4, the row items of the PFCM in this example are assigned a plurality of types of process flows. The column items of the PFCM are assigned a plurality of types of processes. Note that the content of the PFCM may be changed and/or updated as appropriate depending on the business tasks of a user of the report inquiry system 500.

In this example, the row items of the PFCM are assigned a plurality of process flows (e.g., "inventory sale," "inventory purchase," "stocktaking," "journal slip process"), which are categorized into types such as "sale," "purchase," etc. A cell at an intersection with a column to which a process, included in each process flow, is assigned contains a flag (corresponding to a "filled circle" in Fig. 4). That is, in the PFCM shown in Fig. 4, the processes included in the "inventory sale" process flow include an "received order" process.

Moreover, in this example, the column items of the PFCM are assigned various processes that may form each type of process flow, such as "received order estimate," "received order contract," etc. Furthermore, each of the column items (in other words, each process assigned to a column item) of the PFCM in this example is assigned processing types that are allowed for process data generated in each process. More specifically, as shown in Fig. 4, there are items indicating the processing types below each of the process titles. That is, in this example, each process is provided with cells corresponding to three processing types: "registration," "change," and "cancellation." A cell representing a processing type that is allowed for the process data generated in each process contains a flag (corresponding to a "filled circle" in Fig. 4).

Meanings (roles) of the processing types will now be described. The "registration" processing type represents whether or not slip data entered as the slip data corresponding to that process are newly registered data. The "change" processing type represents whether or not slip data entered as the slip data corresponding to that process are modified data of existing data. The "cancellation" processing type represents whether or not slip data entered as the slip data corresponding to that process are cancellation data for existing data. That is, for example, data entry for new registration and for modification of existing data is allowed in a case of the "received order estimate" process in Fig. 4.

The mobile terminal management server 10 has a function to provide various types of data stored in the process flow DB 18 and in the miscellaneous DB 10X depending on a request from a predetermined external device (in this example, one of the mobile terminals 31 to 3N and the enterprise resource planning systems 100, 200, and 300). That is, the mobile terminal management server 10 has a function as a core business server. In other words, the mobile terminal management server 10 includes an ERP engine.

In addition, in this example, it is assumed that the mobile terminal management server 10 has a function as a DWH server, although not shown, which has various functions for implementing a data warehouse. Because the mobile terminal management server 10 includes both an ERP engine and a configuration to function as a DWH server, information required from an enterprise resource planning system can be provided also to an enterprise resource planning system having a different configuration (e.g., as far as a core business server and a DWH server are concerned, the enterprise resource planning system 100 having both, the enterprise resource planning system 200 only having a core business server, or the enterprise resource planning system 300 only having a DWH server).

Each of the mobile terminals 31 to 3N is an information processing device, such as, for example, an iPad (registered trademark), having a central processing unit (CPU), a ROM, a RAM, a display portion, and the like. In this example, it is assumed that each of the mobile terminals 31 to 3N includes various applications, such as a Web browser, available for report data handling. In addition, in this example, each of the mobile terminals 31 to 3N has a function to define a query (an item to be retrieved, a retrieval key, an extraction key, etc.) for obtaining required report data (in this example, process flow data) from the mobile terminal management server 10 depending on an operational input by a user for example, and to send the query to the mobile terminal management server 10.

In this example, each of the mobile terminals 31 to 3N has a function to communicate with the mobile terminal management server 10 via the repeater 20 and the communication network 40, and to output data obtained from the mobile terminal management server 10 on the display portion by means of a function of software, such as, for example, a predetermined Web application (Web browser).

A process for updating process flow data stored in the process flow data temporary storage DB 16 will now be described. In this example, the mobile terminal management server 10 reads process flow data (which will become latest data) stored in the process flow DB 18 provided in the mobile terminal management server 10 when the time for updating data (e.g., a predetermined time in a case of daily update (two o'clock at night, etc.)) arrives, and then stores (stores as new data, or overwrites with) the process flow data in a predetermined storage area of the process flow data temporary storage DB 16, thereby updates the stored information in the process flow data temporary storage DB 16. In this manner, the stored information in the process flow data temporary storage DB 16 is updated by a batch process.

Next, an operation of the report inquiry system 500 in this example will be described with reference to the drawings. Description of an operation or a process that is not necessarily relevant to this present invention may be omitted.

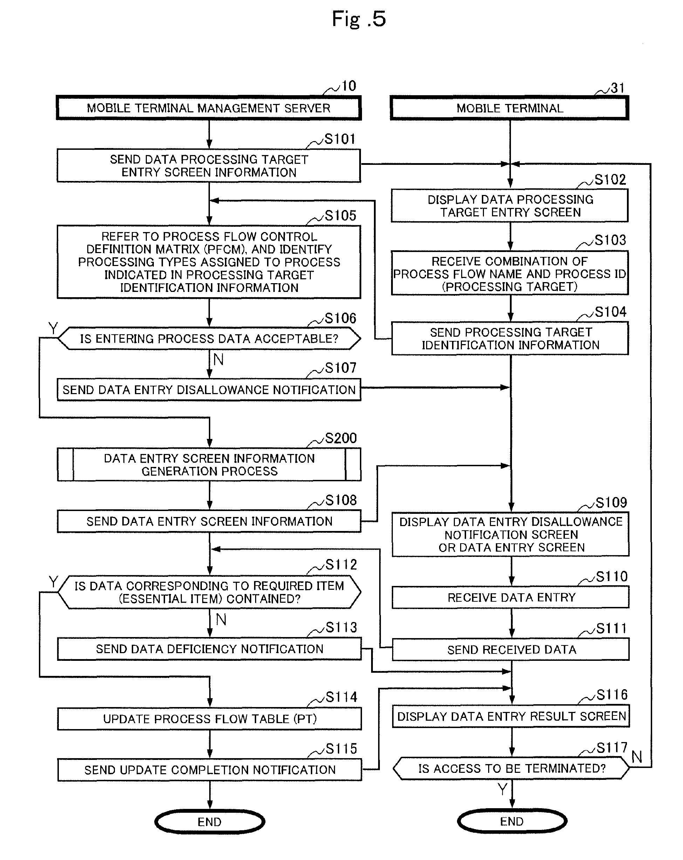

Fig. 5 is a flowchart illustrating an example of a process flow data entry process (hereinafter referred to as "data entry process"), which is performed by, for example, the mobile terminal management server 10 of the report inquiry system 500 in this example. Here, a description will be given, as an example, for a case in which the mobile terminal management server 10 receives process flow data entry depending on a request from the mobile terminal 31 used by a user X.

The data entry process is initiated when, for example, the mobile terminal management server 10 receives a data entry request from the mobile terminal 31 to which the user X has logged in.

In the data entry process, firstly, the mobile terminal management server 10 sends predetermined data processing target entry screen information to the mobile terminal 31 (step S101).

Upon receiving the data processing target entry screen information, the mobile terminal 31 displays, on the display portion included therein, a data processing target entry screen that is represented in the data processing target entry screen information received (step S102).

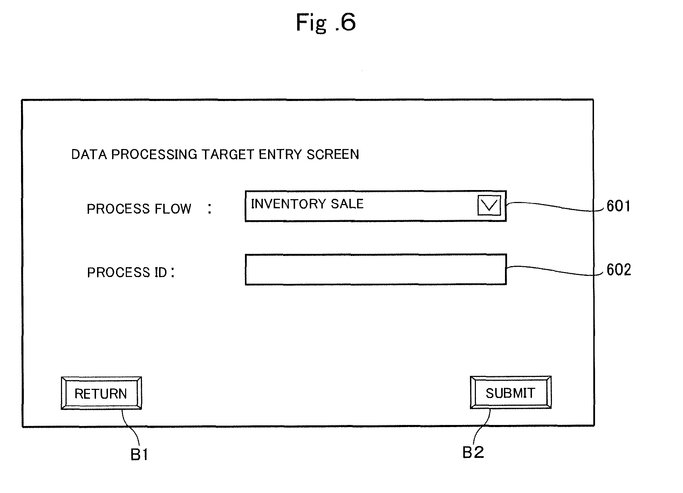

Fig. 6 is an illustrative diagram illustrating an example of a data processing target entry screen. As shown in Fig. 6, the data processing target entry screen includes a process flow receiving area 601 for receiving entry of a process flow (specifically, the name, the ID, and the like of the process flow) for which the data are entered (or updated), a process ID receiving area 602 for receiving entry of an ID (hereinafter referred to as "process ID") indicating the process for which the data are entered, a return button B1 clicked to return to a previous screen, and a submit button B2 clicked to send the data in the receiving areas 601 and 602 to the mobile terminal management server 10. It is assumed, in this example, that the process flow receiving area 601 is configured such that the user X selects a process flow from a list displayed as a pull-down menu.

In the data processing target entry screen, the user X operates an operation portion (e.g., a keyboard displayed on the display portion where a touch panel is disposed) provided in the mobile terminal 31 to input a process flow and a process ID, and then clicks the submit button B2.

When the submit button B2 is clicked with a process flow and a process ID entered, the mobile terminal 31 sends processing target identification information that represents a combination (hereinafter referred to as "processing target") of the process flow and the process ID entered, to the mobile terminal management server 10 (step S104). Note that the content of the processing target identification information described above is merely by way of example, and the content of the processing target identification information may be any other content that can identify any process flow data (or any process data included in process flow data).

Upon receiving the processing target identification information, the mobile terminal management server 10 refers to the PFCM, and identifies the processing types assigned to the process indicated in the processing target identification information received (step S105). Here, if, for example, processing target identification information representing a process ID "xxxx (a number that represents received order)" as the processing target is received, then the mobile terminal management server 10 identifies the processing types as "registration" and "change" processing types (see Fig. 4). Note that the configuration may be such that identification of processing types is performed, for example, after determining, in a process described later, that entering of process data is acceptable.

After identifying the processing type of the process indicated by the processing target identification information, the mobile terminal management server 10 determines whether entering of process data is acceptable or not (step S106). Here, if, for example, processing target identification information representing an "inventory sale" process flow and a process ID "xxxx (a number that represents received order estimate)" as the processing target has been received, then the mobile terminal management server 10 determines that entering of process data is not acceptable because the flag is not set in the corresponding cell (see Fig. 4) (N at step S106), and then sends a data entry disallowance notification that notifies the user X of disallowance of entering data, to the mobile terminal 31 (step S107).

In contrast, if, for example, processing target identification information representing an "inventory sale" process flow and a process ID "xxxx (a number that represents received order)" as the processing target has been received, then the mobile terminal management server 10 determines that entering of process data is acceptable (see Fig. 4) (Y at step S106), and then performs a process for generating data entry screen information (data entry screen information generation process) for displaying a data entry screen (step S200).

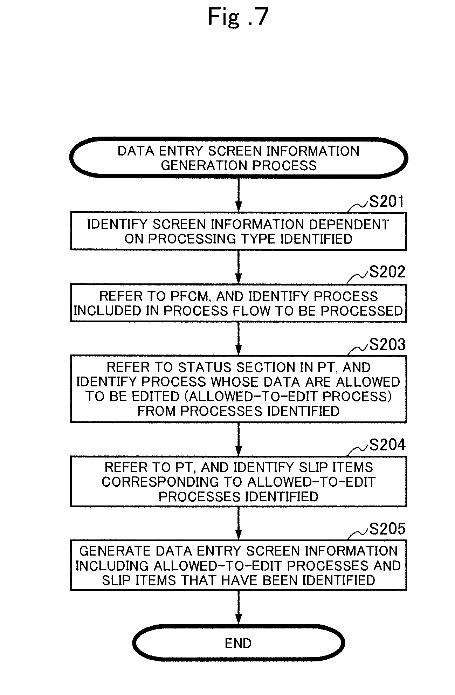

Fig. 7 is a flowchart illustrating an example of a data entry screen information generation process performed by the mobile terminal management server 10 of this example. Here, a description will be given, as an example, for a case in which processing target identification information representing an "inventory sale" process flow and a process ID "xxxx (a number that represents received order)" as the processing target is received.

In the data entry screen information generation process, the mobile terminal management server 10 first identifies screen information dependent on the processing type identified (step S201). In this example, it is assumed that the screen information is stored in the miscellaneous DB 10X. In addition, the configuration may be such that the screen information is shared depending on what the processing type is. Moreover, when a plurality of processing types are assigned to a process to be processed, the configuration may be such that a user is requested to select a processing type. The following description assumes that the user X has selected the "registration" processing type from the "registration" and "change" processing types that correspond to an "received order" process.

After identification of screen information, the mobile terminal management server 10 refers to the PFCM, and identifies a process or processes included in the process flow indicated by the processing target identification information (step S202). In this example, the mobile terminal management server 10 identifies a plurality of processes including an "received order" process, as the processes corresponding to an "inventory sale" process flow (i.e., the processes assigned to the column items corresponding to the cells having "filled circles" in the inventory sale row in Fig. 4).

Next, the mobile terminal management server 10 refers to the status section in the process flow table PT (see Fig. 3), and identifies a process or processes whose data are allowed to be edited (hereinafter referred to as "allowed-to-edit process") from the processes identified as the processes included in the process flow (step S203). In this example, the mobile terminal management server 10 identifies a process other than that for which "1" is set in the status section (i.e., a process that has already been completed) as an allowed-to-edit process when the processing type identified is "registration." Note that, in this example, the plurality of types of processes include a process having data that are handled differently from those of the "registration" processing type. That is, a condition may also exist which specifies a process as an allowed-to-edit process, in addition to the status in the status section, depending on the type of the process. In this example, the mobile terminal management server 10 identifies a process that has already been completed also as an allowed-to-edit process when the processing type is "change" or "cancellation." Then, the mobile terminal management server 10 generates report data as a so-called credit slip based on the data entered by the user X (alternatively, requests the user X to enter data as a credit slip), and registers the credit slip generated to the process flow table PT. This produces a same result as canceling the process that has already been completed.

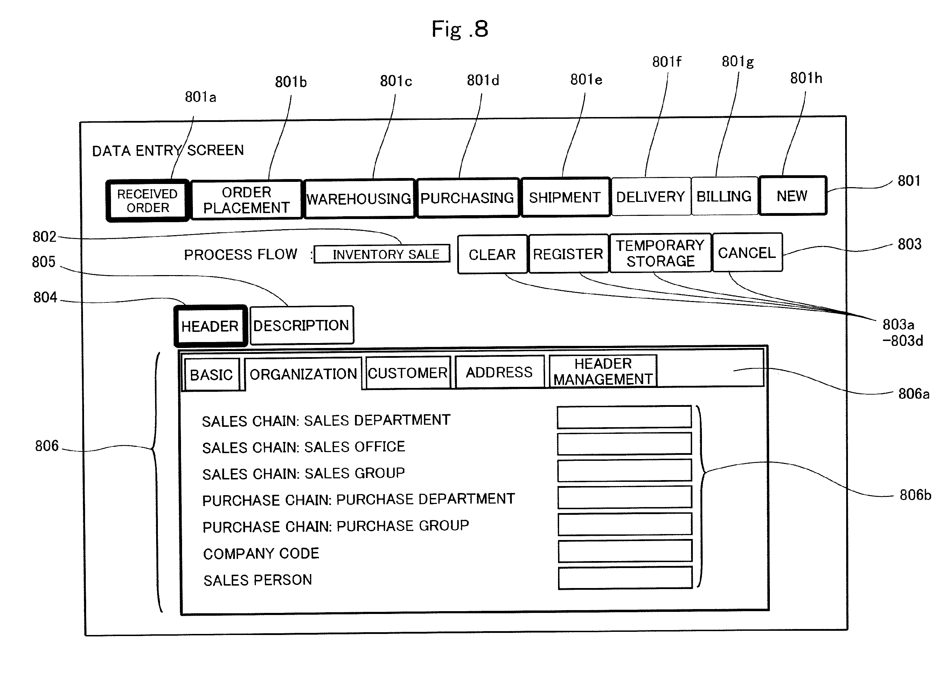

After identification of the allowed-to-edit processes, the mobile terminal management server 10 refers to the process flow table PT, and identifies slip items (e.g., process-specific data items associated with each process) corresponding to the allowed-to-edit processes identified (step S204). In this example, the mobile terminal management server 10 identifies various items, which are classified as either header items or description items (see Figs. 8 to 11 described later), as the slip items corresponding to an "received order" process.

After identification of the slip items, the mobile terminal management server 10 generates data entry screen information including the allowed-to-edit processes and the slip items that have been identified (step S205), and proceeds to the process at step S108 in the data entry process (see Fig. 5).

Upon completion of the data entry screen information generation process, the mobile terminal management server 10 sends the data entry screen information generated in the data entry screen information generation process to the mobile terminal 31 (step S108).

Upon receiving the data entry screen information, the mobile terminal 31 displays the data entry screen indicated by the data entry screen information received, on the display portion provided therein (step S109). In this process, when a data entry disallowance notification has been received from the mobile terminal management server 10, the mobile terminal 31 informs the user X that entering of data has not been allowed, by displaying a predetermined data entry disallowance notification screen (not shown).

Fig. 8 is an illustrative diagram illustrating an example of a data entry screen. As shown in Fig. 8, the data entry screen includes a process button display area 801, which displays process buttons 801a to 801h for each receiving a request for a display operation of slip items (hereinafter referred to as "slip item display operation") of the plurality of respective processes included in the process flow indicated by the processing target identification information, a process flow name display area 802 for displaying process flow names, a handling type button display area 803, which displays handling type buttons 803a to 803d for each receiving a specifying operation of a handling type (hereinafter referred to as "handling type specifying operation") of data entered by a user, a header button 804 for receiving a request for a display operation of process data classified as the header items, a description button 805 for receiving a request for a display operation of process data classified as the description items, and a process data receiving area 806 for receiving process data entered by a user.

There are three types of display appearances for the process buttons 801a to 801h displayed in the process button display area 801. In Fig. 8, the display appearances are grouped into that of the process button 801a indicated by a bold frame, that of the process buttons 801f and 801g indicated by a thin frame, and that of the other process buttons 801b to 801e and 801h. A process button indicated by a bold frame represents a process just to be performed. A process button indicated by a thin frame indicates that no user selection is accepted (that is, that button cannot be clicked), and that processing relating to that process has already been completed. The other process buttons represent processes that can be edited. Note that the display appearances for the process buttons are not limited to those described above, but the configuration may be such that, for example, a process button that represents the process just to be performed (i.e., the process whose data items are displayed in the process data receiving area 806) is displayed in a different color from the other process buttons, and/or a process button that represents a process that has already been completed is grayed out.

The clear button 803a displayed in the handling type buttons display area 803 receives a request for an operation of clearing (deleting) all the data entered in the process data receiving area 806. The register button 803b receives a request for an operation of registering the data entered in the process data receiving area 806 (that is, registering to a process flow data DB 11b) as a slip. The temporary storage button 803c receives a request for an operation of temporarily storing the data entered in the process data receiving area 806 as a temporary slip. The cancel button 803d receives a request for a cancel operation for a slip retrieved.

When the user X clicks the header button 804, the process data receiving area 806 displays data items classified as the header items. In this example, as illustrated in Fig. 8, subcategory names of further grouped items (e.g., "basic," "organization," etc.) of the data items classified as the header items are displayed in a subcategory display area 806a, and data items to be entered by the user X are displayed in a data receiving area 806b.

When the data entry screen is displayed, the mobile terminal 31 accepts data entry by the user X (step S110).

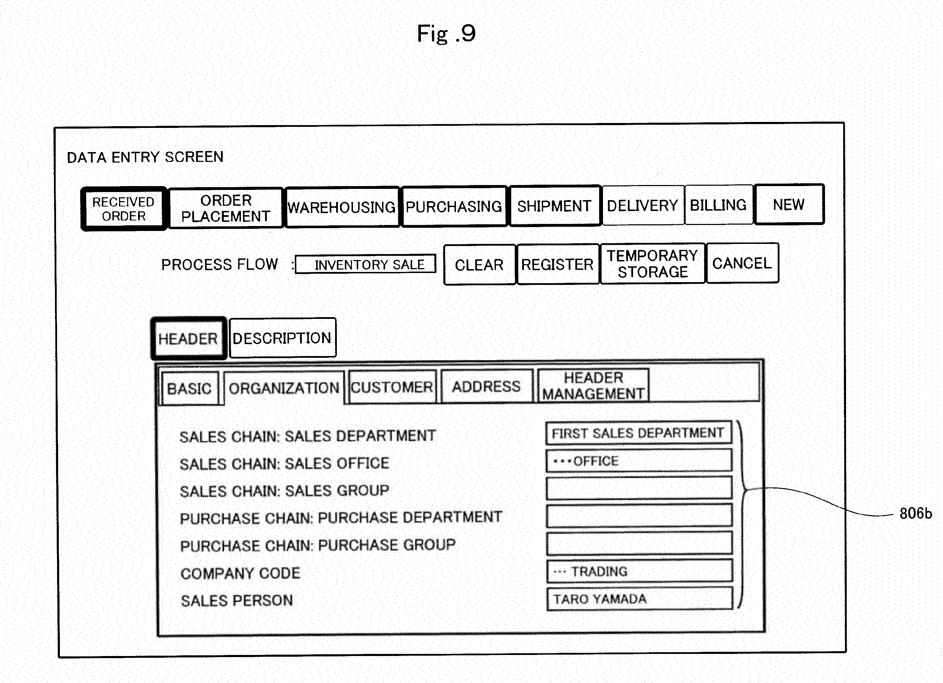

Fig. 9 is an illustrative diagram illustrating an example of a data entry screen when data entry by the user X is accepted. As shown in Fig. 9, the data receiving area 806b in the data entry screen displays data (e.g., "First Sales Department") entered by the user X.

Note that when the description button 805 is clicked by the user X while the data entry screen is displayed, the mobile terminal 31 changes the displayed content of the process data receiving area 806.

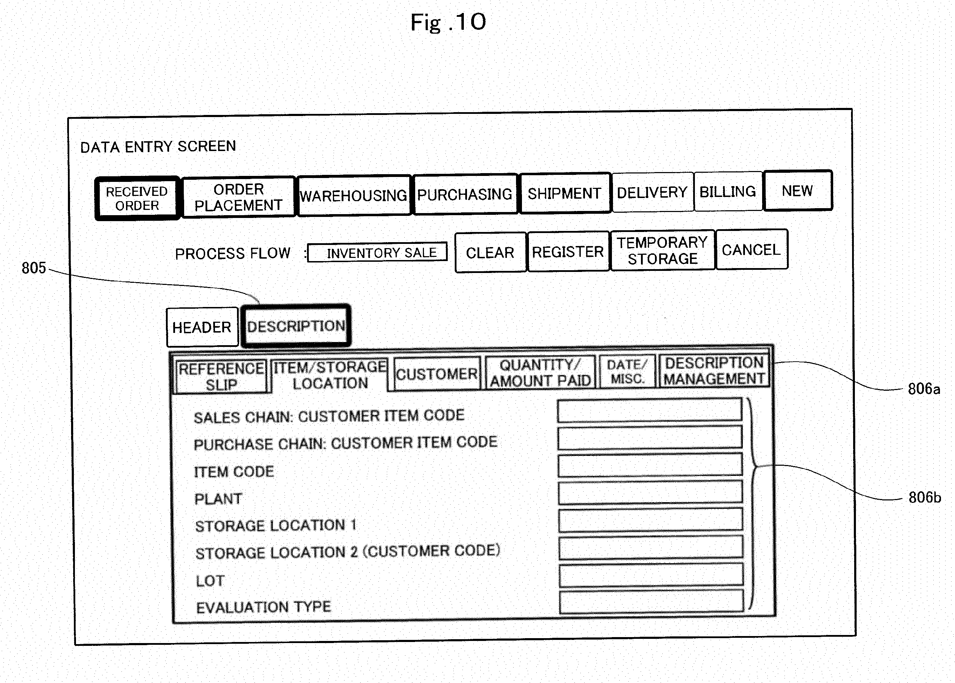

Fig. 10 is an illustrative diagram illustrating an example of a data entry screen when the description button 805 is clicked. As shown in Fig. 10, when the description button 805 is clicked, the description button 805 is highlighted (e.g., is indicated by a bolder frame than that of the header button 804), and the content displayed in the process data receiving area 806 is changed to process data items that are classified as the description items.

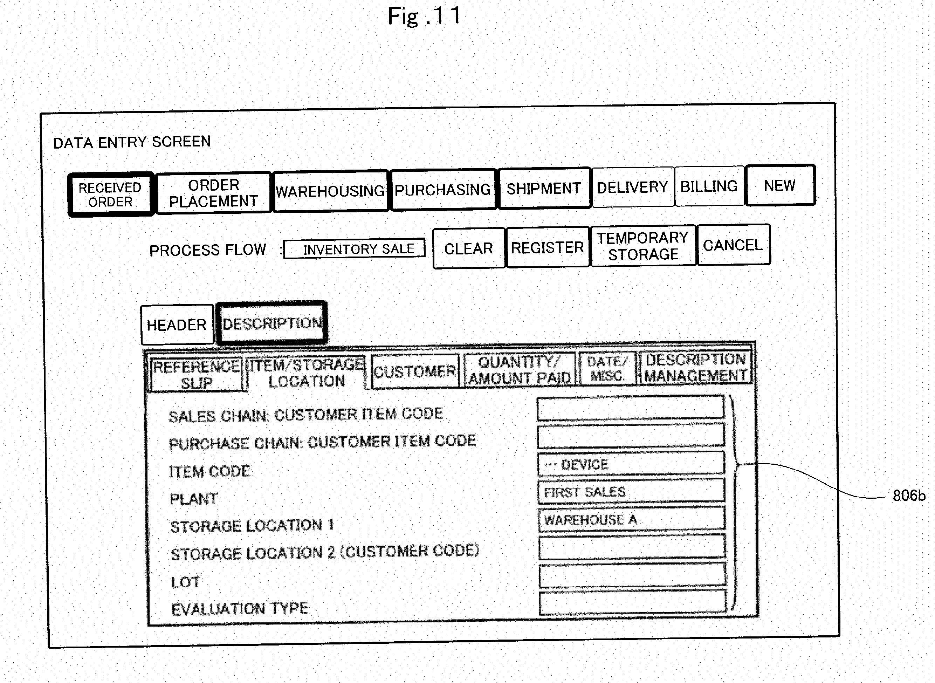

Fig. 11 is an illustrative diagram illustrating an example of a data entry screen when data entry by the user X is accepted after the description button is clicked. As shown in Fig. 11, the data receiving area 806b in the data entry screen displays data (e.g., "First Sales," "Warehouse A," etc.) entered by the user X.

After receiving a data entering operation performed by the user X using the data entry screen, and then receiving a click of, for example, the register button 803b, the mobile terminal 31 sends the received data to the mobile terminal management server 10 (step S111).

Upon receiving the data received by the mobile terminal 31, the mobile terminal management server 10 determines whether or not data corresponding to an item or items (hereinafter representatively referred to as "essential item") required to update process flow data are contained (step S112). Here, when it is determined that data corresponding to the essential item are not contained (N at step S112), then the mobile terminal management server 10 sends a predetermined data deficiency notification to the mobile terminal 31 (step S113). It is assumed that the essential item is registered in advance in, for example, the process flow DB 18.

In contrast, when it is determined that data corresponding to the essential item are contained (Y at step S112), then the mobile terminal management server 10 updates the process flow table PT each stored in the process flow data temporary storage DB 16 and in the process flow DB 18 based on the processing type identified and on the data received (step S114). In this example, the data received are registered in a corresponding storage area when the processing type is "registration." If, for example, the processing type is "cancellation," the configuration is such that a credit slip is generated based on the data received, and the process flow tables PT are thus updated, so that cancellation history is retained. Note that the method for updating a process flow table PT is not limited to one described above, but the configuration may be such that, for example, the mobile terminal management server 10 only updates the process flow table PT stored in the process flow data temporary storage DB 16, and the updated content of the process flow data temporary storage DB 16 is reflected on the process flow DB 18 according to an operation of the administrator of the report inquiry system at a predetermined time, such as, for example, before updating of data stored in the process flow data temporary storage DB 16 using the process flow DB 18.

When the process flow tables PT are updated, the mobile terminal management server 10 sends a predetermined update completion notification to the mobile terminal 31 (step S115), and then terminates the process here.

The mobile terminal 31 displays a predetermined screen dependent on the notification received, as a data entry result screen showing a result of data entry by the user X, in response to the reception of the data deficiency notification or the update completion notification (step S116).

After displaying the data entry result screen, the mobile terminal 31 determines whether or not to terminate the access to the mobile terminal management server 10 (step S117). At this point, when the mobile terminal 31 determines that the access to the mobile terminal management server 10 should not be terminated, by receiving a predetermined data update continuation request (N at step S117), then the mobile terminal 31 terminates displaying the data entry result screen, and thus proceeds to the process at step S102.

In contrast, when the mobile terminal 31 determines that the access to the mobile terminal management server 10 should be terminated, by receiving a predetermined access termination request (Y at step S117), then the mobile terminal 31 terminates displaying the data entry result screen, and then terminates the process here.

As described above, in the embodiment described above, the mobile terminal management server 10, which is a server on which ERP software runs, which server provides various types of data depending on a request from the mobile terminal 31 used by the user X via the communication network 40, includes the process flow DB 18 that stores process flow data containing various types of data relating to a process flow including a plurality of business processes, and a matrix data storage unit (e.g., the process flow control definition matrix DB 19; see Fig. 4) that stores matrix data (e.g., PFCM data), which are information relating to the business processes, and which represent the process flow including the business processes, and a processing type (e.g., "registration," "change," or "cancellation") allowed for process data generated in each of the business processes, and the mobile terminal management server 10 is configured to receive, from the mobile terminal 31, processing target identification information by which the process flow and the business processes can be identified, identify a processing type corresponding to the processing target identification information received, by referring to the matrix data storage unit, receive input data entered from the mobile terminal 31 by the user X, and update the process flow data stored in the process flow DB 18 (e.g., process flow data stored in the process flow table) based on the processing type identified and on the input data received. Therefore, a load required for business system maintenance and for data update can be reduced in a business system (ERP system) that provides a user with information relating to a report.

That is, it can be determined whether or not data can be updated by a user using the matrix data, and thus a processing load on the system can be reduced as compared to a conventional system requiring a plurality of programs. Moreover, since there is no need to develop a plurality of programs depending on the types of data, program development cost can be reduced.

Furthermore, in the embodiment described above, the matrix data (e.g., PFCM data) includes row items to which a plurality of types of process flows are assigned, and column items to which a plurality of types of business processes are assigned, and in each cell, a flag is set, indicating whether or not the process flow assigned to the corresponding row item includes the business process assigned to the corresponding column item (see Fig. 4). The mobile terminal management server 10 is configured to refer to the flag set in a cell corresponding to a combination of a process flow and a business process indicated by the processing target identification information, and when the flag indicates that the process flow includes the business process (e.g., when the cell has a "filled circle" set therein; see Fig. 4), the mobile terminal management server 10 is configured to identify the processing type corresponding to the processing target identification information as a processing type allowed for process data of that business process (e.g., the processing type of a cell, corresponding to the business process and the processing type, which has a "filled circle" therein; for an "received order" process, "registration" and "change" processing types; see Fig. 4), and receive input data dependent on the processing type identified (e.g., data entered using a data entry screen dependent on the processing type). Therefore, process flow data can be managed by using a single file that stores PFCM data, and thus a load required for business system maintenance and for data update can be reduced.

Moreover, in the embodiment described above, the mobile terminal management server 10 is configured to determine whether or not the input data received satisfies an update condition (e.g., that data corresponding to an essential item are contained) preset as a condition required for updating data relating to a business process in the process flow indicated by the processing target identification information, and when it is determined that the input data satisfies the update condition, update the process flow data using the input data. Therefore, data input error can be prevented in advance.

Furthermore, in the embodiment described above, the configuration is such that the update condition is that the input data contains data corresponding to an essential item preset in relation to a business process indicated by the processing target identification information. Therefore, determination of data input error can be efficiently performed as compared to a case in which error determination data shared by a plurality of processes are used.

Although no specific mention is made in the embodiment described above, the configuration may be such that a database (e.g., the process flow DB 18) imposes a limitation on a change operation of data content with respect to at least a part of the data that have already been registered in a process flow table after predetermined data have been entered. That is, for example, the common data section in the process flow table PT provided in the process flow DB 18 can be changed (e.g., data can be deleted or overwritten) before process-specific data relating to a "delivery acceptance inspection" process is registered in the process flow table PT. In contrast, the common data section cannot be freely changed after process-specific data relating to a "delivery acceptance inspection" process is registered in the process flow table PT. In this case, the configuration can be such that a limitation is imposed, such as, for example, a password to be entered, or a condition to be satisfied, when a user is to change a content of the common data section. Such a configuration can prevent inconsistency (i.e., a loss of consistency in relating data caused by a change in the data that have already been entered) from occurring in the entire data due to a change in a part of data.

Although no specific mention is made in the embodiment described above, the mobile terminal management server 10 performs the processes described above (see Fig. 5 and Fig. 7) according to a processing program (mobile terminal management program) stored in a storage medium provided therein.

### Industrial Applicability

The present invention is advantageous in reducing a processing load required to update and retrieve data in a business system (particularly in an ERP system) that provides a mobile communication terminal with information relating to a report.

### Reference Signs List

- 10: mobile terminal management server
- 20: repeater
- 31-3N: mobile terminal
- 40: communication network
- 51, 52, 53: communication network
- 100, 200, 300: enterprise resource planning system
- 110, 310: core business server
- 120, 220: DWH server
- 500: report inquiry system

## Claims

1. A mobile terminal management server, which is a server on which ERP software runs, and which provides various types of data depending on a request from a mobile terminal used by a user via a communication network, the mobile terminal management server comprising:
a process flow data storage means configured to store process flow data containing various types of data relating to a process flow that includes a plurality of business processes;
a matrix data storage means configured to store matrix data, which are information relating to the business processes, and which represent the process flow including the business processes, and a processing type allowed for process data generated in each of the business processes;
a processing target identification information receiving means configured to receive, from the mobile terminal, processing target identification information by which the process flow and the business processes can be identified;
a processing type identification means configured to identify a processing type corresponding to the processing target identification information received by the processing target identification information receiving means, by referring to the matrix data storage means;
an input data receiving means configured to receive, from the mobile terminal, input data entered by the user; and
a process flow data update means configured to update the process flow data stored in the process flow data storage means based on the processing type identified by the processing type identification means and on the input data received by the input data receiving means.

2. The mobile terminal management server according to claim 1, wherein
the matrix data includes
row items to which a plurality of types of process flows are assigned, and
column items to which a plurality of types of business processes are assigned,
in each cell, a flag is set, indicating whether or not a process flow assigned to a corresponding one of the row items includes a business process assigned to a corresponding one of the column items,
the processing type identification means refers to the flag set in a cell corresponding to a combination of a process flow and a business process indicated by the processing target identification information, and when the flag indicates that the process flow includes the business process, the processing type identification means identifies the processing type corresponding to the processing target identification information as a processing type allowed for process data of the business process, and
the input data receiving means receives input data dependent on the processing type that is identified by the processing type identification means.

3. The mobile terminal management server according to claim 1 or 2 comprising:
an input data determination means configured to determine whether or not the input data received by the input data receiving means satisfies an update condition preset as a condition required for updating data relating to a business process in the process flow indicated by the processing target identification information,
wherein
when the input data determination means determines that the input data satisfies the update condition, the process flow data update means updates the process flow data using the input data.

4. The mobile terminal management server according to claim 3, wherein the update condition is that the input data contains data corresponding to an essential item preset in relation to a business process indicated by the processing target identification information.

5. A mobile terminal management program that executes ERP software, and which instructs a mobile terminal management server to execute a process to provide various types of data depending on a request from a mobile terminal used by a user via a communication network, wherein
the mobile terminal management program instructs
the mobile terminal management server including
a process flow data storage means configured to store process flow data containing various types of data relating to a process flow that includes a plurality of business processes, and
a matrix data storage means configured to store matrix data, which are information relating to the business processes, and which represent the process flow including the business processes, and a processing type allowed for process data generated in each of the business processes,
to execute
a processing target identification information receiving process of receiving, from the mobile terminal, processing target identification information by which the process flow and the business processes can be identified,
a processing type identification process of identifying a processing type corresponding to the processing target identification information received in the processing target identification information receiving process, by referring to the matrix data storage means,
an input data receiving process of receiving, from the mobile terminal, input data entered by the user, and
a process flow data update process of updating the process flow data stored in the process flow data storage means based on the processing type identified in the processing type identification process and on the input data received in the input data receiving process.
